# EUROPEAN PATENT APPLICATION

(11) **EP 4 516 530 A2**
(43) Date of publication of application: **05.03.2025**
(21) Application number: 25151325.5
(22) Date of filing: 27.09.2016
(51) Int. Cl.: B42D 25/45

(54) **SECURITY DEVICE**

(30) Priority: 02.10.2015 GB 201517401
(62) Divisional of application: 16777747.3
(71) Applicant: De La Rue International Limited, Basingstoke, Hampshire RG22 4BS (GB)
(72) Inventor: GODFREY, John, RG21 7UQ Basingstoke (GB)
(74) Representative: Gill Jennings & Every LLP

(57) **Abstract**

A security device comprises a plurality of viewing regions or windows (4, 5, 6). Each region includes a lenticular device (4A, 5A, 6A), the lenticular devices being constructed so that at different respective first viewing angles or first viewing angle ranges, the lenticular device in each viewing region generates substantially the same first image, the first viewing angles or first viewing angle ranges of the lenticular devices being substantially non-overlapping.

## Description

The invention relates to security devices for use in and on articles or documents of value to enable them to be easily authenticated but difficult to counterfeit. Security devices are typically used on security documents such as banknotes, cheques, passports, identity cards, certificates of authenticity, fiscal stamps and other secure documents, in order to confirm their authenticity.

Articles of value, and particularly documents of value such as banknotes, cheques, passports, identification documents, certificates and licences, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment. Examples include features based on one or more patterns such as microtext, fine line patterns, latent images, venetian blind devices, lenticular devices, moiré interference devices and moiré magnification devices, each of which generates a secure visual effect. Other known security devices include holograms, watermarks, embossings, perforations and the use of colour-shifting or luminescent /fluorescent inks. Common to all such devices is that the visual effect exhibited by the device is extremely difficult, or impossible, to copy using available reproduction techniques such as photocopying. Security devices exhibiting non-visible effects such as magnetic materials may also be employed.

One class of security devices are those which produce an optically variable effect, meaning that the appearance of the device is different at different angles of view. Such devices are particularly effective since direct copies (e.g. photocopies) will not produce the optically variable effect and hence can be readily distinguished from genuine devices. Optically variable effects can be generated based on various different mechanisms, including holograms and other diffractive devices, moiré interference and other mechanisms relying on parallax such as venetian blind devices, and also devices which make use of focussing elements such as lenses, including moiré magnifier devices, integral imaging devices and so-called lenticular devices.

Examples of known security devices are described in WO-A-2015/011493, WO-A-2014/184560, US-B-6856462, US-A-2014/103632, WO-A-2012/153106, WO-A-2015/011494, US-B-7808710, and US-A-2007/063053.

There is a need to provide a new type of security device which is easy to authenticate yet difficult to counterfeit.

In accordance with a first aspect of the present invention, a security device comprises a plurality of viewing regions, each region including a lenticular device, wherein each lenticular device comprises an array of focusing elements (10); and one or more corresponding arrays of image elements (12A, 12B, 12C) located substantially at the focus of the focusing elements, the or each array of image elements (12A, 12B, 12C) cooperating with the array of focusing elements (10) to generate a respective image when the device is viewed at a corresponding viewing angle, the array of focusing elements (10) and array(s) of image elements (12A, 12B, 12C) being arranged being constructed so that at different respective first viewing angles or first viewing angle ranges, the lenticular device in each viewing region generates substantially the same first image, the first viewing angles or first viewing angle ranges of the lenticular devices being substantially non-overlapping.

In this aspect of the invention, we make use of the switching effect property of lenticular devices but, rather than rely on a single device, we arrange for at least two and preferably more than two such devices to be provided in respective viewing regions, each lenticular device generating the same image at respectively different viewing angles. In this way, the observer will see the symbol appear to move from one viewing region to another. This is a very easy way to authenticate the device although, this is difficult to counterfeit due to the need for precise registration between the lenses and image portions of each device.

One or two-dimensional lenticular devices can be used. A one-dimensional device comprises an array of focusing elements, typically cylindrical lenses, that overlies a corresponding array of image sections, strips or "slices", each of which depicts only a portion of an image which is to be displayed. Image strips or slices from two or more different images are interleaved and, when viewed through the focusing elements, at each viewing angle, only selected image slices will be directed towards the viewer. In this way, different composite images can be viewed at different angles. However it should be appreciated that no magnification typically takes place and the resulting image which is observed will be of substantially the same size as that to which the underlying image slices are formed. Some examples of lenticular devices are described in US-A-4892336, WO-A-2011/051669, WO-A-2011051670, WO-A-2012/027779 and US-B-6856462. More recently, two-dimensional lenticular devices have also been developed and examples of these are disclosed in WO 2015/011494 and WO 2015/011493. Lenticular devices have the advantage that different images can be displayed at different viewing angles, giving rise to the possibility of animation and other striking visual effects which are not possible using the moiré magnifier or integral imaging techniques.

The lenticular devices are constructed so that when they are viewed at angles outside the first viewing angle or first viewing angle range then no image is generated.

This arrangement is preferred since the image will only be seen in one viewing region at a time.

In an alternative approach, the lenticular devices are constructed so that at different respective second viewing angles or second viewing angle ranges, the lenticular device in each viewing region generates substantially the same second image, different from the first image, wherein the second viewing angle or viewing angle range of each lenticular device does not, or does not substantially, overlap the first viewing angle or first viewing angle range of that device, the second viewing angles or second viewing angle ranges being substantially non-overlapping.

This is a more sophisticated device in which each lenticular device generates at least two images at respectively different first and at least second viewing angles. This can be further enhanced if the first viewing angle or first viewing angle range of one lenticular device substantially corresponds to the second viewing angle or second viewing angle range respectively of another lenticular device. In this way, when considering two viewing regions, at one viewing angle, the first image will be seen in one viewing region and the second image in the other.

In preferred examples, the first image viewed in each viewing region will be identical. However, some variation is envisaged and for example the first image generated by each lenticular device may vary in one or more of colour, size and orientation from the first image generated by the or each other lenticular device.

So far, we have described relatively simple devices but in further preferred embodiments, each lenticular device is constructed to generate images at respectively different viewing angles, wherein when the security device is viewed at successive viewing angles each lenticular device displays one of a sequence of different images, the images in each sequence being the same but the sequences being arranged such that at each viewing angle or range of viewing angles, each lenticular device generates a different one of the images. In this case, the observer will look to see how the symbols alternate in sequence from one viewing region to the next in a cyclic manner.

According to comparative examples, a security device comprises a plurality of viewing regions, each region including a lenticular device, the lenticular devices being constructed so that at respective, different viewing angles or viewing angle ranges, the lenticular device in only one of the viewing regions generates an image, the viewing angles or viewing angle ranges being substantially non-overlapping.

In these comparative examples, we take advantage of the switching nature of the lenticular devices so that an image is only seen in one viewing region at a time. That image could be substantially the same although with a possible variation in one or more of colour, size and orientation from the first image generated by the or each other lenticular device. Alternatively, the images could be different and, for example, could form a recognisable sequence, such as an animation.

Examples of images suitable for use with this invention include symbols, alphanumeric characters, logos and pictorial elements for example portraits, animals or landscapes.

The security devices can be used to secure a variety of articles and documents of value and could be provided in the form of labels and the like. In particularly preferred applications, the security device is provided on a substrate such as a polymer or paper substrate, the substrate typically being part of a security article chosen from the group of banknotes, cheques, passports, identity cards, certificates of authenticity and fiscal stamps. The security device could also be formed as part of a security thread.

Some examples of security devices according to the invention will now be described with reference to the accompanying drawings, in which:-
Figures 1A-1C illustrate the appearance of a polymer banknote, provided with a first embodiment of the security device according to the invention, at different viewing angles;
Figure 2 is a schematic, cross-section through the device shown in Figure 1;
Figure 3 is a schematic, cross-section similar to Figure 2 but through a second embodiment for producing the effects shown in Figure 1;
Figure 4 is a view similar to Figure 3 but showing a third, security thread embodiment for producing the effect shown in Figure 1;
Figure 5A is a schematic, cross-section through a lenticular device for use in a comparative example;
Figure 5B illustrates a cross-section through the comparative example; and,
Figures 5C-5E illustrate the appearance of the comparative example at different viewing angles.

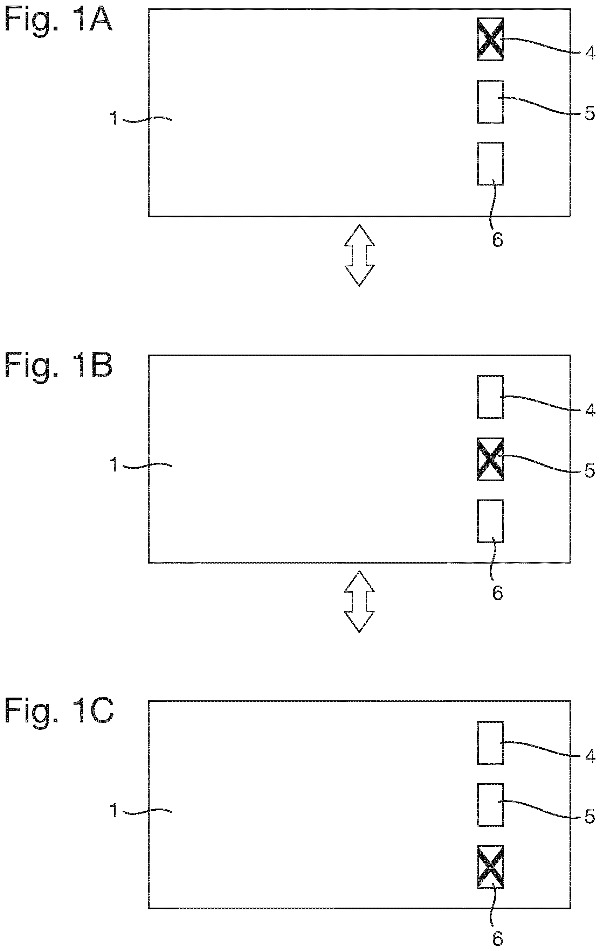

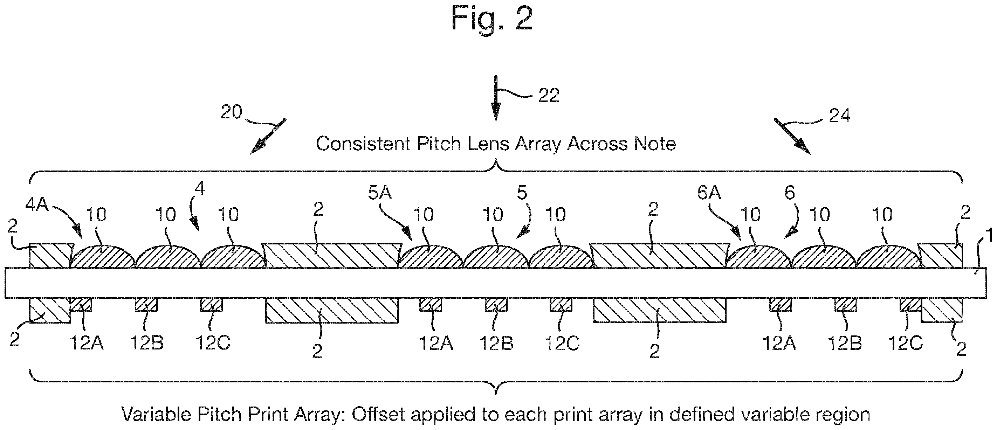

Figures 1 and 2 illustrate a banknote formed by a transparent or translucent polymer substrate 1, for example BOPP, on each side of which is provided a white, print receptive, opaque layer 2. The layers 2 are formed with rectangular, transparent viewing regions or windows 4, 5, 6.

Each viewing region is provided with a respective lenticular device 4A, 5A, 6A. Each lenticular device 4A-6A comprises a one-dimensional array of parallel, cylindrical microlenses 10 formed in a conventional manner, for example by cast curing, on one side of the substrate 1 and parallel image strips 12A, 12B, 12C printed or otherwise provided on the opposite surface of the substrate 1. The thickness of the substrate 1 is selected so that the image strips 12A-12C are formed at the focus of the lenses 10. The microlenses typically have width dimensions in the range 5 to 200µm, more preferably 10 to 100µm and even more preferably 10 to 70µm.

It is important to note that the diagrams are not to scale and in reality there will be multiple repeats of the lens and images in each window.

It will be noted that the microlenses 10 are registered in the same manner in each of the windows with three microlenses being provided with an equal pitch. Each array of image strips 12A-12C, however, although defining the same pitch as the microlenses 10, are offset by 1/3 of that pitch relative to the viewing region or window 4, in the window 5, and by a further 1/3 pitch offset in the window 6.

The image strips 12A-12C located in the window 4 are chosen so that when the window 4 is viewed in a direction 20, corresponding to the "first" viewing angle of the device 4A, the microlenses 10 will cause the image strips 12A-12C, which define respective parts of the resultant image, to form that resultant image, in this case a letter X, which can be viewed by an observer holding the banknote at the appropriate angle, as shown in Figure 1A.

The strips 12A-12C in the window 5 are identical to the strips 12A-12C respectively in the window 4 but since they are offset with respect to the lenses 10 from their position in the window 4, the symbol X will be viewed only when the window 5 is observed at its own "first viewing angle" in the direction 22. This is shown in Figure 1B.

With respect to the window 6, again the image strips 12A-12C are the same as those in the window 4 but due to the further offset relative to the microlenses 10, the symbol X will only be seen when the lenticular device 6A is viewed at is own "first viewing angle" corresponding to the direction 24. This is shown in Figure 1C.

When the banknote is viewed in the direction 20, therefore, the letter X generated by the lenticular device 4A will be observed as shown in Figure 1A. However, since the viewing direction 20 does not correspond to the first viewing angle 22 or 24, the lenticular devices 5A, 6A will not generate an image.

When the banknote 1 is viewed in the direction 22, the lenticular device 5A will generate the letter X as seen in Figure 1B but since the direction 22 is not the same as the direction 20 or the direction 24, the lenticular devices 4A and 6A will not generate an image.

Finally, when the banknote 1 is viewed in the direction 24 (Figure 1C), the lenticular device 6A will generate the symbol X but since the direction 24 is not the same as the direction 20 or 22, the lenticular devices 4A and 5A will not generate images.

The observer will therefore be able to see very easily how the symbol X moves in sequence from the window 4 to the window 5 and from the window 5 to the window 6 as the banknote is tilted. He thus observes the combination of variable regions defined by the windows 4-6 interspersed with static regions defined by the intermediate opacifying layers 2.

This makes the device easy to authenticate but yet difficult to fabricate.

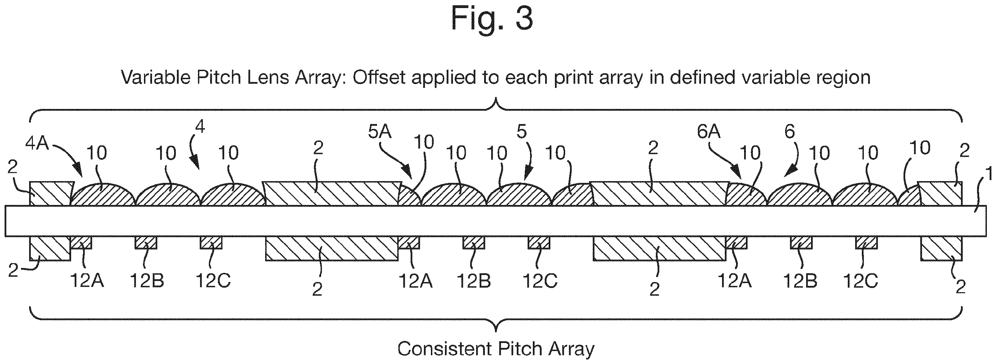

Figure 3 illustrates a modified embodiment in which the printed image strips 12A-12C are printed in the same register within each of the windows 4-6 but the microlenses 10, although being provided at the same pitch, are located with a 1/3 pitch offset in successive windows. The resultant effect is the same as in the Figure 2 embodiment and as shown in Figure 1.

In the embodiments shown, the lenticular devices are viewed in transmitted light. However, it should be noted that in modifications of the above embodiments (not shown) the viewing region could comprise a half-window with the opaque layer 2 continuing across all or part of the window over the image element array. In this case, the window will not be transparent and will be viewed in reflected light. The window may (or may not) still appear relatively translucent compared to its surroundings. It is possible that some of the viewing regions could be fully transparent windows and some be half-windows.

In the embodiments described above, the security device has been formed directly in a polymer-based banknote. The invention is also applicable to paper documents. In this scenario the viewing regions of the security device or article can be arranged as a series of patches on the surface of the base substrate of the security document, or can be visible in windows on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0860298 and WO-A-03095188 describe different approaches for the embedding of wider partially exposed threads into a paper substrate. Wide threads, typically having a width of 2 to 6mm, are particularly useful as the additional exposed thread surface area allows for better use of optically variable devices, such as that presently disclosed. An alternative for forming windows in paper banknotes are known from WO-A-2000/39391.

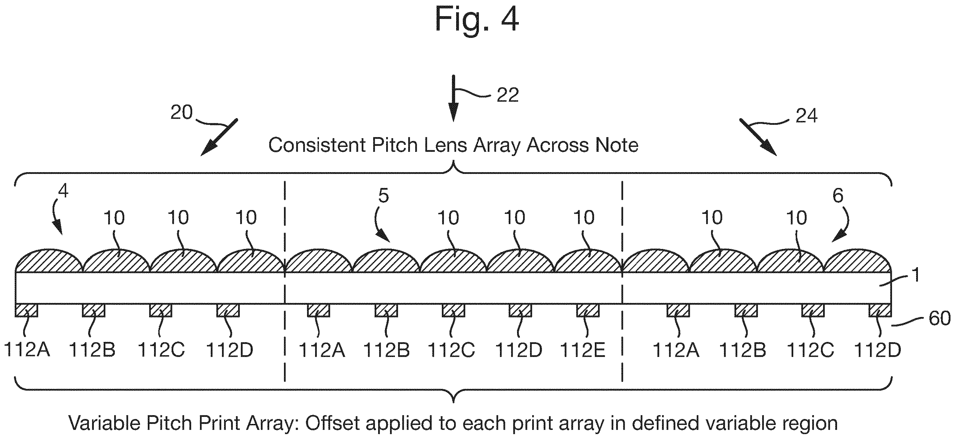

The invention is also applicable to security threads as, for example, shown in Figure 4. The construction of the security thread is similar to the construction of the polymer banknote described above and the same reference numerals will be used to designate the same features, where appropriate. Thus, the security thread shown in Figure 4 comprises a polymer substrate 1 which is transparent or translucent. An upper surface of the substrate 1 has a one-dimensional array of parallel, cylindrical microlenses 10 formed thereon, for example by cast curing. It will be noted that the microlenses 10 are provided in the form of a regular array of constant pitch.

On the underside of the substrate 1 are printed arrays of parallel image strips 112A-112D in regions 4 and 6 and an array of parallel image strips 112A-112E in the region 5. These arrays are printed in register with corresponding microlenses 10 and thus have the same pitch as the microlenses but with successive arrays of image strips being offset relative to the corresponding microlenses 10 by 1/3 of the pitch so as to define three different lenticular devices 4A, 5A, 6A located in respective viewing regions 4, 5, 6. In practice, the lenticular devices in regions 4-6 can be made of any combination of lens/microimages (dependant on size of area).

The thickness of the substrate 1 corresponds to the focal length of the microlenses 10 so that the printed image strips are at the focus of the microlenses and as a result each array of image strips and corresponding array of microlenses will reconstruct a symbol, in this case the letter X, when viewed at the corresponding "first" viewing angle 20, 22, 24 respectively of each. The effect is then the same as in the Figure 1 and 2 example whereby when the security thread is viewed in the direction 20, the symbol X will be seen only in the viewing region 4; when the security thread is viewed in the direction 22, the symbol X will be viewed only in the viewing region 5; and when the security thread is viewed in the direction 24, the symbol X will only be seen in the viewing region 6.

In this example, a further continuous background print layer 60 is also provided. The symbols can then be seen against the colour of that background 60. The presence of the coloured background layer 60 enhances the contrast between the observed image and the adjacent region.

When the security thread is embedded in a paper substrate, the security thread can be registered with the windows in the paper substrate such that the variable regions will be defined by paper windows and the static regions by paper bridges. One method of registering a security thread in paper to expose a predetermined region in a substrate is disclosed in EP1567714.

It will be noted that in the embodiments described above, a switching effect occurs in which the symbol X is either seen in a viewing window or the viewing window displays no image at all.

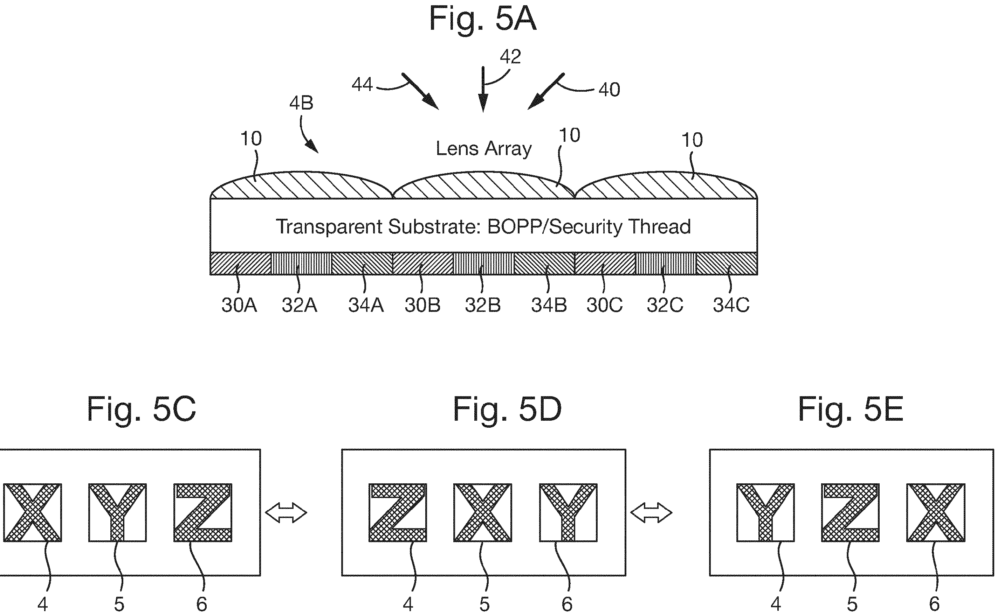

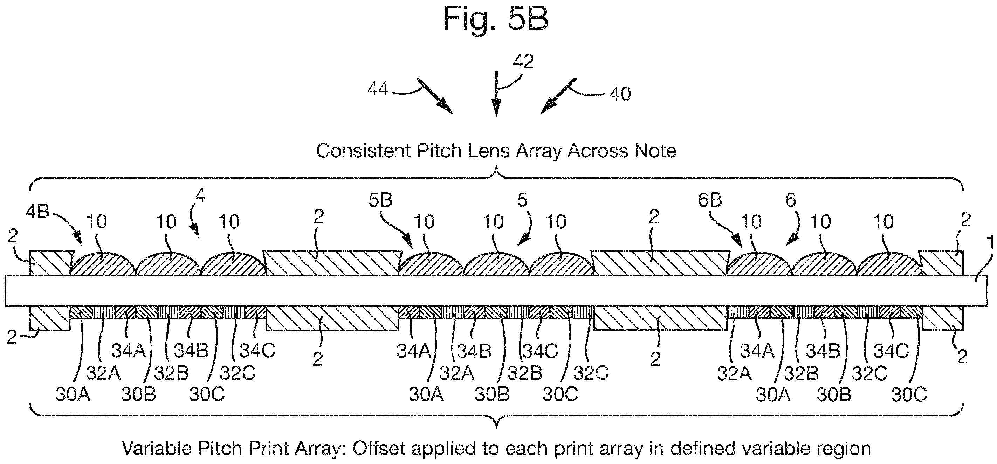

In comparative examples, each lenticular device generates a symbol or other character at each viewing angle. An example of a security device of this type is illustrated in Figure 5. Figure 5A shows the structure of a single lenticular device 4B comprising a transparent or translucent, polymer substrate 1 of for example BOPP. On the upper surface of the substrate 1 is provided a one-dimensional array of three parallel cylindrical microlenses 10. On the opposite side of the substrate 1, under each microlens 10, are printed respective sets of three image strips 30A-34A; 30B-34B; and 30C-34C.

The thickness of the substrate 1 corresponds to the focal length of the microlenses 10 so that the image strips are located at the focus of those microlenses.

The image strips 30A, 30B, 30C in combination with the microlenses 10 will form a symbol X when the lenticular device is viewed in its direction 40. The image strips 32A, 32B, 32C will generate with the microlenses 10 a symbol Y when viewed in the direction 42. The image strips 34A, 34B, 34C will generate in combination with the microlenses 10 a symbol Z when viewed in the direction 44.

In the full security device shown in Figure 5B, white, print receptive opaque layers 2 are provided on each side of the polymer substrate 1 defining rectangular viewing regions or windows 4, 5, 6 respectively. The lenticular device 4B is located in the window 4. Further lenticular devices 5B, 6B are located in the windows 5, 6 respectively.

The lenticular device 5B is similar to the lenticular device 4B except that the order of the image strips in each array of three image strips has been changed as shown in Figure 5B.

The lenticular device 6B is also similar to the lenticular device 4B except that the image strips have been ordered differently from both the lenticular device 4B and device 5B.

The result of this ordering of the image strips 30-34 is that when the security device is viewed in the direction 40, the symbol X will be displayed in the window 4, the symbol Y in the window 5, and the symbol Z in the window 6 (Figure 5C).

When the security device is viewed in the direction 42, the symbol Z will be displayed in the window 4, the symbol X in the window 5, and the symbol Y in the window 6 (Figure 5D).

When the security device is viewed in the direction 44, the symbol Y will be seen in the window 4, the symbol Z in the window 5, and the symbol X in the window 6.

Thus, as the banknote is tilted so that it is viewed successively in the directions 40, 42, 44, the observer will see the sequence of symbols X, Y, Z cycling through the three orders shown in Figure 5C-5E which leads to a particularly secure method of authenticating the device.

Although we have referred to viewing the banknote at particular angles, in practice, each "viewing angle" will typically comprise a range of viewing angles. However, the viewing angle or range of viewing angles at which an image is generated by each lenticular device image will be substantially non-overlapping with the corresponding viewing angle or range of viewing angles at the other lenticular devices.

In an ideal situation, when we refer to viewing angles or viewing angle ranges that are substantially non-overlapping, the image or images viewable at each of those viewing angles or viewing angle ranges would be visible by itself without interference from the image visible at the other angle or range of viewing angles. Nevertheless, it is envisaged that there could be a transition from one image to the other as the device is tilted such that the viewing angles or ranges of viewing angles are not completely non-overlapping.

It will also be noted that although the examples described all involve one-dimensional lenticular devices based on cylindrical lenses and image strips, the invention is equally applicable to two-dimensional lenticular devices formed by arrays of spherical microlenses and corresponding arrays of image pixels.

According to aspects of the invention there may be provided security devices in accordance with the following numbered clauses:
Numbered clause 1. A security device comprising a plurality of viewing regions, each region including a lenticular device, the lenticular devices being constructed so that at different respective first viewing angles or first viewing angle ranges, the lenticular device in each viewing region generates substantially the same first image, the first viewing angles or first viewing angle ranges of the lenticular devices being substantially non-overlapping.
Numbered clause 2. A security device according to numbered clause 1, wherein the lenticular devices are constructed so that when they are viewed at angles outside the first viewing angle or first viewing angle range then no image is generated.
Numbered clause 3. A security device according to numbered clause 1, wherein the lenticular devices are constructed so that at different respective second viewing angles or second viewing angle ranges, the lenticular device in each viewing region generates substantially the same second image, different from the first image, wherein the second viewing angle or viewing angle range of each lenticular device does not, or does not substantially, overlap the first viewing angle or first viewing angle range of that device, the second viewing angles or second viewing angle ranges being substantially non-overlapping.
Numbered clause 4. A security device according to numbered clause 3, wherein the first viewing angle or first viewing angle range of one lenticular device substantially corresponds to the second viewing angle or second viewing angle range respectively of another lenticular device.
Numbered clause 5. A security device according to any of the preceding numbered clauses, wherein the first image generated by each lenticular device varies in one or more of colour, size and orientation from the first image generated by the or each other lenticular device.
Numbered clause 6. A security device according to numbered clause 1, wherein each lenticular device is constructed to generate images at respectively different viewing angles, wherein when the security device is viewed at successive viewing angles each lenticular device displays one of a sequence of different images, the images in each sequence being the same but the sequences being arranged such that at each viewing angle or range of viewing angles, each lenticular device generates a different one of the images.
Numbered clause 7. A security device comprising a plurality of viewing regions, each region including a lenticular device, the lenticular devices being constructed so that at respective, different viewing angles or viewing angle ranges, the lenticular device in only one of the viewing regions generates an image, the viewing angles or viewing angle ranges being substantially non-overlapping.
Numbered clause 8. A security device according to numbered clause 7, wherein each image is substantially the same.
Numbered clause 9. A security device according to numbered clause 8, wherein each image varies in one or more of colour, size or orientation with respect to the other images.
Numbered clause 10. A security device according to numbered clause 7, wherein the images form a recognisable sequence, such as an animation.
Numbered clause 11. A security device according to any of the preceding numbered clauses, wherein each image comprises one of a symbol, alphanumeric character, logo, or pictorial element such as a portrait, animal or landscape.
Numbered clause 12. A security device according to any of the preceding numbered clauses, wherein each lenticular device comprises an array of focusing elements; and one or more corresponding arrays of image elements located substantially at the focus of the focusing elements, the or each array of image elements cooperating with the array of focusing elements to generate a respective image when the device is viewed at a corresponding viewing angle.
Numbered clause 13. A security device according to numbered clause 12, wherein the focusing elements comprise a one dimensional array of parallel cylindrical lenses and the image elements comprise parallel image strips.
Numbered clause 14. A security device according to numbered clause 13, wherein the pitches of the arrays of lenses and of the image elements are the same but the registration of the arrays of image elements to the corresponding arrays of lenses varies between viewing regions.
Numbered clause 15. A security device according to numbered clause 12, wherein the array of focusing elements is a two-dimensional array of spherical lenses and wherein the or each array of image elements is a two-dimensional array of image pixels.
Numbered clause 16. A security device according to any of numbered clauses 12 to 15, wherein the focusing elements are registered in the same manner with the viewing regions.
Numbered clause 17. A security device according to any of numbered clauses 12 to 16, wherein the image elements are registered in the same manner with the viewing regions.
Numbered clause 18. A security device according to any of the preceding numbered clauses, wherein the viewing regions comprise transparent or translucent windows.
Numbered clause 19. A security device according to any of the preceding numbered clauses, the security device being provided on a substrate such as a polymer or paper substrate.
Numbered clause 20. A security device according to numbered clause 19, wherein the substrate is part of a security article chosen from the group of banknotes, cheques, passports, identity cards, certificates of authenticity and fiscal stamps.
Numbered clause 21. A security device according to numbered clause 18, wherein the substrate is part of a security thread.

## Claims

1. A security device comprising a plurality of viewing regions (4, 5, 6), each region including a lenticular device, wherein each lenticular device comprises an array of focusing elements (10); and one or more corresponding arrays of image elements (12A, 12B, 12C) located substantially at the focus of the focusing elements, the or each array of image elements (12A, 12B, 12C) cooperating with the array of focusing elements (10) to generate a respective image when the device is viewed at a corresponding viewing angle, the array of focusing elements (10) and array(s) of image elements (12A, 12B, 12C) being arranged so that at different respective first viewing angles or first viewing angle ranges, the lenticular device in each viewing region (4, 5, 6) generates substantially the same first image, the first viewing angles or first viewing angle ranges of the lenticular devices being substantially non-overlapping, and
wherein the lenticular devices are constructed so that when they are viewed at angles outside the first viewing angle or first viewing angle range then no image is generated.

2. A security device according to claim 1, wherein the first image generated by each lenticular device varies in one or more of colour, size and orientation from the first image generated by the or each other lenticular device.

3. A security device according to any of the preceding claims, wherein each image comprises one of a symbol, alphanumeric character, logo, or pictorial element such as a portrait, animal or landscape.

4. A security device according to any of the preceding claims, wherein the focusing elements (10) comprise a one dimensional array of parallel cylindrical lenses and the image elements comprise parallel image strips (12A, 12B, 12C).

5. A security device according to claim 5, wherein the pitches of the arrays of lenses and of the image elements are the same but the registration of the arrays of image elements to the corresponding arrays of lenses varies between viewing regions.

6. A security device according to claim any of the preceding claims, wherein the array of focusing elements (10) is a two-dimensional array of spherical lenses and wherein the or each array of image elements is a two-dimensional array of image pixels.

7. A security device according to any of claims any of the preceding claims, wherein the focusing elements (10) are registered in the same manner with the viewing regions.

8. A security device according to any of claims any of the preceding claims, wherein the image elements are registered in the same manner with the viewing regions.

9. A security device according to any of the preceding claims, wherein the viewing regions comprise transparent or translucent windows.

10. A security device according to any of the preceding claims, the device comprising three viewing regions.

11. A security device according to any of the preceding claims, the security device being provided on a substrate (1) such as a polymer or paper substrate.

12. A security device according to claim 11, wherein the substrate (1) is part of a security article chosen from the group of banknotes, cheques, passports, identity cards, certificates of authenticity and fiscal stamps.

13. A security device according to claim 9, wherein the substrate (1) is part of a security thread.
